# EUROPÄISCHE PATENTSCHRIFT

(11) **EP 1 162 145 B1**
(45) Veröffentlichungstag und Bekanntmachung des Hinweises auf die Patenterteilung: **03.12.2003**
(21) Anmeldenummer: 01109887.8
(22) Anmeldetag: 24.04.2001
(51) Int. Cl.: B65B 13/32

(54) **Verfahren und Vorrichtung zum Reibschweissen eines thermoplastischen Bandes**
Method and device for friction-welding of a thermoplastic band
Procédé et dispositif pour le soudage par friction d'une bande thermoplastique

(30) Priorität: 16.05.2000 DE 10024049
(43) Veröffentlichungstag der Anmeldung: 12.12.2001
(73) Patentinhaber: Maschinenfabrik Gerd Mosca AG, 69429 Waldbrunn (DE)
(72) Erfinder: Gratz, Michael, Whitby, Ontarion L1N 7W9 (CA)
(74) Vertreter: Freischem, Stephan, Dipl.-Ing.

(56) Entgegenhaltungen:
- EP-A- 0 564 189
- US-A- 5 306 383

## Beschreibung

Die Erfindung betrifft ein Verfahren zum Reibschweißen zweier sich überlappender Abschnitte eines thermoplastischen Bandes gemäß dem Oberbegriff des Anspruchs 1. Sie betrifft ferner eine Vorrichtung zum Reibschweißen gemäß dem Oberbegriff des Anspruchs 4.

In dem deutschen Patent DE 44 22 147 C2 ist eine Vorrichtung beschrieben, welche zur Durchführung eines Umreifungsverfahrens mit einfacher Verschweißung mittels einer Schwingplatte geeignet ist. Dabei umfaßt die Verbindungsvorrichtung zwei Klemmplatten, von denen die erste nach der Bildung der Schlaufe den freien Endabschnitt gegen eine Widerlagerplatte drückt und somit festlegt und von denen die zweite nach dem Spannen des Bandes durch einen Spannantrieb den mit dem Bandvorrat verbundenen Anfangsabschnitt der Schlaufe durch Pressen gegen eine Widerlagerplatte festlegt. Anschließend wird der Anfangsabschnitt von dem Bandvorrat abgeschnitten, wobei zwei überlappende Bandabschnitte zwischen den Klemmplatten aufeinanderliegen und eine Schwingplatte, die zwischen den Klemmplatten angeordnet ist, die beiden Bandabschnitte gegeneinander und gegen eine Widerlagerplatte drückt. Durch die Schwingbewegungen der Schwingplatte wird aufgrund der Reibung zwischen den Bandabschnitten eine Wärme erzeugt, welche zum Aufschmelzen und Verschweißen der beiden Bandabschnitte ausreicht.

Dieses bekannte Verbindungsverfahren hat sich im praktischen Einsatz bewährt. Es weist jedoch einige Schwächen auf, die zu einer unzureichenden Verbindung zwischen den beiden Bandabschnitten führen können. Da beide Klemmplatten nur zum Einklemmen eines der beiden Bandabschnitte vorgesehen sind, ist der Endanschlag für das freie Ende des die Schlaufe bildenden Bandes zwischen der Klemmplatte für den Anfangsabschnitt des Bandes und der Schwingplatte vorgesehen. Der Abstand zwischen dem Endanschlag und der Schwingplatte beträgt nur wenige Millimeter. Da das Ende des Bandes aus elastischem Kunststoff mit hoher Geschwindigkeit gegen den Endanschlag bewegt wird, ist ein Rückprallen des Bandendes um ein gewisses Maß zu beobachten. In ungünstigen Fällen kann das freie Bandende um mehrere Millimeter zurückprallen, so daß es im Bereich der durch die Schwingplatte zu erzeugenden Schweißstelle ruht, wenn der Endabschnitt des Bandes durch die erste Klemmplatte festgelegt ist. Auf diese Weise wird die Länge der erzeugten Schweißstelle reduziert. Diese Reduktion der Länge der Schweißstelle kann zu einer unzulässigen Schwächung der Verbindung führen, so daß das Risiko besteht, daß die das Packgut mit Spannung umgebende Bandschlaufe sich öffnet.

Wie erwähnt, ist aus der DE 44 22 147 C2 auch eine Vorrichtung bekannt, die mit einer Schwingplatte eine Schweißstelle erzeugt.

Die Druckschrift EP 0 564 189 A1 zeigt eine Vorrichtung zur Durchführung eines Umreifungsverfahrens, bei dem zwei Schweißstellen erzeugt werden. Hierzu sind zwei Schwingplatten in der Längsrichtung des Bandes hintereinander angeordnet. Die Erzeugung zweier hintereinanderliegender Schweißstellen soll die Zuverlässigkeit und Haltbarkeit der erzeugten Schweißverbindungen erhöhen. Es verbleibt allerdings das Problem, daß jeder der Klemmköpfe dieser Vorrichtung nur zum Einklemmen eines der beiden Bandabschnitte vorgesehen ist und der Endanschlag für das freie Bandende zwischen dem Klemmkopf für den Anfangsabschnitt des Bandes und der Schwingplatte vorgesehen ist. Der Abstand zwischen dem Endanschlag und der Schwingplatte ist entsprechend kurz, so daß ein Rückprallen des Bandendes bis in den Bereich der durch die Schwingplatte zu erzeugenden Schweißstelle zu befürchten ist. Dies kann - wie erwähnt - zu einer unzulässigen Schwächung der Schweißverbindung führen.

Aufgabe der Erfindung ist es, ein Verfahren und eine Vorrichtung zum Reibschweißen zweier sich überlappender Abschnitte eines thermoplastischen Bandes zu schaffen, welche die Zuverlässigkeit und Haltbarkeit der erzeugten Schweißverbindungen weiter erhöht.

Diese Aufgabe wird bezüglich des Verfahrens erfindungsgemäß durch die Merkmale des Anspruchs 1 gelöst.

Durch die Erzeugung mehrerer hintereinanderliegender Schweißstellen besteht bereits eine gute Zuverlässigkeit. Zwar weist jede einzelne Schweißstelle in etwa nur die gleiche Festigkeit wie die nach dem genannten Stand der Technik bekannte Schweißstelle auf, jedoch wird von jedem Ende der Schlaufe die Zugkraft nur in die angrenzende Schweißstelle eingeleitet. Sind mehr als zwei Schweißstellen vorhanden, nehmen im wesentlichen die beiden äußeren die Zugkraft auf. Die Belastung der beiden belasteten Schweißstellen ist gegenüber der einzelnen Schweißstelle aus dem Stand der Technik in etwa halbiert. Sollte dennoch eine Schweißstelle durch die Spannkräfte zerstört werden, wird durch mindestens eine verbleibende, vollständig funktionsfähige Schweißstelle der Zusammenhalt der beiden Bandabschnitte gewährleistet.

Das erfindungsgemäße Verfahren ist dadurch gekennzeichnet, daß zunächst das freie Ende des Bandes vor Bildung der Schlaufe in Vorschubrichtung nacheinander an einer ersten Schwingplatte und einer kombinierten Klemm/Schwingplatte vorbei zu einer Bandführungsvorrichtung (Bandführungsrahmen) transportiert wird, welche das Band in Form einer Schlaufe um das Packgut führt. Nach Bildung der Schlaufe wird das freie Bandende an einer ersten Klemmplatte sowie der neben dieser ersten Klemmplatte angeordneten, eingangs genannten Schwingplatte und der daneben liegenden kombinierten Klemm-/Schwingplatte vorbei gegen einen Endanschlag transportiert. Das freie Bandende wird also nach Bildung der Schlaufe zwischen der Widerlagerplatte und den durch den mit dem Bandvorrat verbundenen Anfangsabschnitt abgedeckten Platten, nämlich der ersten Schwingplatte und der kombinierten Klemm-/Schwingplatte hindurchbewegt. Beim Berühren des Endanschlages wird ein Banderfassungssignal abgegeben. Aufgrund dieses Signals wird die genannte erste Klemmplatte in der Richtung senkrecht zur Bandebene auf die Widerlagerplatte zu bewegt wird, so daß der Endabschnitt des Bandes zwischen den Oberflächen der ersten Klemmplatte und der Widerlagerplatte eingeklemmt wird. Anschließend wird die Schlaufe durch eine der ursprünglichen Vorschubrichtung entgegenwirkende Spannkraft um das Packgut herum gespannt und durch die kombinierte Klemm-/Schwingplatte in Verbindung mit der Widerlagerplatte festgelegt, wobei beide einander überlappenden Bandabschnitte zwischen der kombinierten Klemm-/Schwingplatte und der Widerlagerplatte eingeklemmt sind.

Nach dem Festlegen des mit dem Bandvorrat verbundenen Anfangsabschnittes der Schlaufe kann dieser nahe der ersten Klemmplatte abgeschnitten werden. Auch die erste Schwingplatte, die zwischen der ersten Klemmplatte und der kombinierten Klemm-/Schwingplatte liegt, wird gegen beide Bandabschnitte und gegen die Widerlagerplatte gedrückt. Abschließend werden sowohl die Klemm-/Schwingplatte als auch die erste Schwingplatte in Schwingbewegungen versetzt, so daß die Schweißstellen entstehen.

Wenn nach diesem erfindungsgemäßen Verfahren gearbeitet wird, erhöht sich die Anzahl der beweglichen Teile im Vergleich zu der aus dem Stand der Technik bekannten Vorrichtung zur Erzeugung einer Schweißstelle nicht. Der in Vorschubrichtung zweiten Klemmplatte wird lediglich durch Kopplung mit einem Schwingantrieb zusätzlich die Funktion einer Schweißvorrichtung zugeordnet. Um die beiden Bandabschnitte zu verschweißen, muß die in Vorschubrichtung zweite Klemmplatte beide Bandabschnitte, d.h. sowohl den Anfangsabschnitt als auch den Endabschnitt der Schlaufe, einklemmen. Hierdurch ergibt sich der weitere Vorteil, daß das freie Ende des Bandes nach Bildung der Schlaufe zu einem Endanschlag geführt werden kann, der weit hinter der zweiten Klemm-/Schwingplatte und nicht zwischen einer Klemmplatte und einer Schwingplatte liegt. Der Endanschlag kann beispielsweise einen Abstand von 40 mm von der Klemm-/Schwingplatte aufweisen, so daß selbst bei einem starken Rückprall des Bandendes nicht zu befürchten ist, daß die von der Klemm-/Schwingplatte erzeugte Schweißung unzulässig verkürzt wird.

Vorzugsweise sind sowohl die Schwingplatte als auch die Klemm/Schwingplatte mit dem gleichen Schwingantrieb verbunden. Dieser Schwingantrieb bewegt die beiden Platten vorzugsweise quer zur Längsrichtung des Bandes. Da die Schwingbewegungen in Querrichtung verlaufen werden die Grenzen und Ränder der Schweißstellen nicht durch die Schwingung verwischt und können definiert eingehalten werden. Hierdurch wird die Gefahr reduziert, daß die Ränder der Schweißstellen ineinander verlaufen und die Schweißstellen sich miteinander verbinden.

In bezug auf die Vorrichtung wird die erfindungsgemäße Aufgabe durch die Merkmale des unabhängigen Patentanspruchs 6 gelöst. Wie die aus der EP 0 564 189 A1 bekannte Vorrichtung weist sie eine zweite, im Überlappungsbereich der beiden Abschnitte angeordnete und gegen eine Widerlagerplatte drückbare Schwingplatte auf, welche eine zweite Schweißstelle erzeugt und im Abstand zur ersten Schwingplatte angeordnet ist. Die zweite Schwingplatte kann entweder integral mit der ersten Schwingplatte verbunden oder separat in Richtung senkrecht zur Bandebene bewegbar sein.

Wie ebenfalls weitgehend aus der EP 0 564 189 A1 bekannt, weist die Vorrichtung die folgenden Merkmale auf:
a) eine erste Klemmplatte, die mit einem Klemmantrieb gekoppelt ist, der diese Klemmplatte gegen den an der Widerlagerplatte anliegenden Endabschnitt des um ein Packgut herum gegen einen Endanschlag geführten Bandes drückt,
b) einen Spannantrieb zum Spannen der durch das Band gebildeten Schlaufe,
c) eine zweite Klemmplatte, die mit einem Klemmantrieb gekoppelt ist, der diese zweite Klemmplatte nach dem Spannen gegen den durch die Widerlagerplatte abgestützten Anfangsabschnitt der Bandschlaufe drückt,
d) mindestens eine zwischen diesen Klemmplatten angeordnete Schwingplatte,
und ist dadurch gekennzeichnet, daß
der Endanschlag hinter der zweiten Klemmplatte liegt, so daß diese sowohl den Anfangsabschnitt als auch den Endabschnitt der Bandschlaufe gegen die Widerlagerplatte drückt. Die zweite Klemmplatte ist zur Bildung einer kombinierten Klemm-/Schwingplatte mit einem Schwingantrieb gekoppelt.

Vorzugsweise sind beide Schwingplatten mit dem gleichen Schwingantrieb gekoppelt. Ferner sollten die Schwingplatten zu Schwingungen in Querrichtung des Bandes angetrieben werden. Vorzugsweise stützen sich alle Klemmund Schwingplatten gegen die gleiche Widerlagerplatte ab. Die Widerlagerplatte kann über ihre gesamte Länge mit einer Strukturierung in Form von spitzen Zähnen versehen sein, welche sich in die Oberfläche des Bandes eindrücken. Gleiches gilt für die dem Band zugewandten Oberflächen der Klemmplatten und/oder Schwingplatten.

Bevorzugte Ausführungsformen der Erfindung sowie ein Beispiel des Standes der Technik werden nachfolgend unter Bezugnahme auf die beigefügten Zeichnungen beschrieben. Hierbei zeigen die Zeichnungen in:
- Fig. 1: eine Seitenansicht einer erfindungsgemäßen Vorrichtung,
- Fig. 2: eine teilweise geschnittene Seitenansicht einer Reibschweißvorrichtung gemäß dem Stand der Technik,
- Fig. 3: die Draufsicht auf ein mit einer Vorrichtung gemäß Fig. 2 verschweißtes Band,
- Fig. 4: eine teilweise geschnittene Seitenansicht einer erfindungsgemäßen Reibschweißvorrichtung, die ein Bestandteil der Vorrichtung aus Fig. 1 bildet,
- Fig. 5: die Draufsicht auf ein mit der Vorrichtung aus Fig. 4 verschweißtes Band.

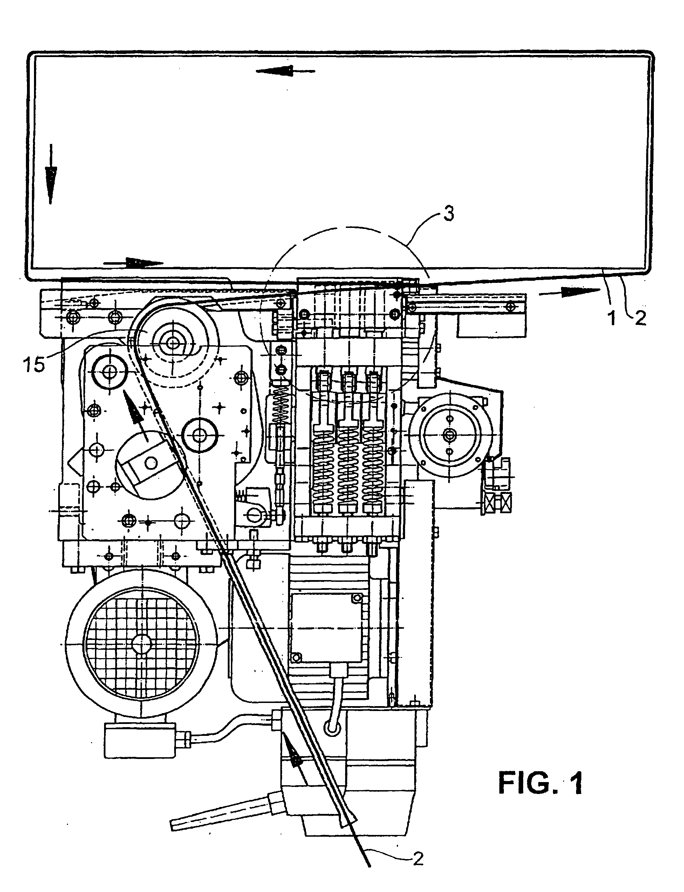

In Fig. 1 ist eine Vorrichtung zur Umschnürung eines Packguts 1 mit einem Band 2 zu erkennen. Das Band 2 wird von einem (nicht dargestellten) Bandvorrat abgezogen und in Pfeilrichtung von unten nach oben transportiert. Eine Umlenkrolle 15 lenkt das Band 2 in eine annähernd waagerecht verlaufende Richtung um. Das Band 2 wird durch die Schweißeinrichtung 3 der Vorrichtung hindurch zu einer Bandführungsvorrichtung (nicht dargestellt) transportiert, welche das Band 2 in Richtung der Pfeile um das Packgut 1 herumführt. Nach der Bildung einer Schlaufe um das Packgut 1 herum wird das freie Bandende wieder in den Bereich der Schweißeinrichtung 3 geführt und gegen einen Endanschlag bewegt. Anschließend wird das freie Bandende festgelegt und das Band 2 entgegen seiner Vorschubrichtung, d.h. entgegen der Richtung der Pfeile gespannt. Bei Erreichen der erforderlichen Spannung wird der mit dem Bandvorrat verbundene Anfangsabschnitt des die Schlaufe bildenden Bandes 2 festgelegt und von dem Bandvorrat abgetrennt. Anschließend werden die überlappenden Abschnitte des Bandes 2 in der Schweißeinrichtung 3 verschweißt.

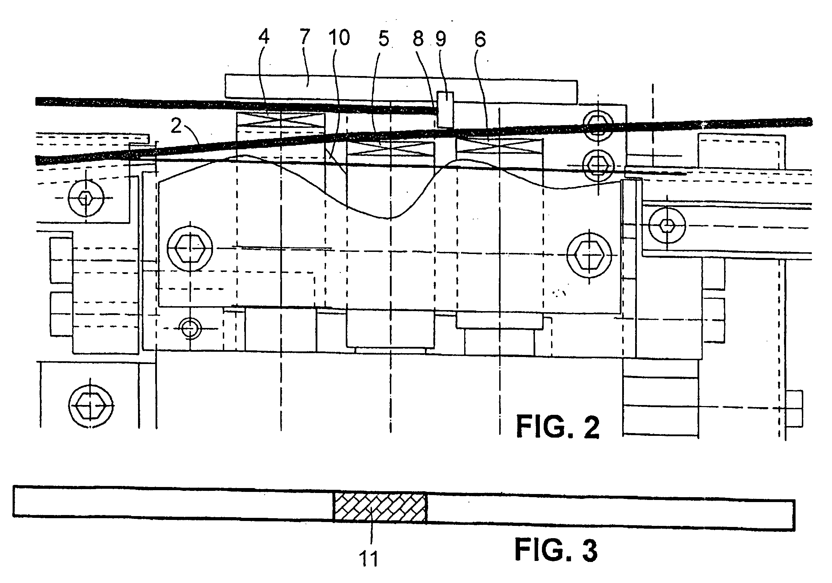

Die Fig. 2 zeigt eine Schweißeinrichtung gemäß dem Stand der Technik, etwa in Übereinstimmung mit der Vorrichtung aus der DE 44 22 147 C2. Das Band 2 wird zunächst hinter einer ersten Klemmplatte 4 und vor den Oberflächen einer Schwingplatte 5 und einer zweiten Klemmplatte 6, welche jeweils einer gemeinsamen Widerlagerplatte 7 gegenüberliegen, hindurch bewegt. Anschließend wird es in eine Bandführungsvorrichtung eingeführt und bildet die Schlaufe um das Packgut (siehe Fig. 1). Nach Bildung der Schlaufe wird das freie Bandende 8 entlang der Oberfläche der Widerlagerplatte 7 gegen einen Endanschlag 9 geführt. Durch das Anschlagen gegen den Endanschlag 9 wird ein Signal abgegeben, welches bewirkt, daß die erste Klemmplatte 4 - wie in Fig. 2 dargestellt - den Endabschnitt des Bandes 2 gemeinsam mit der Widerlagerplatte 7 einklemmt. Nun kann durch einen Spannantrieb der mit dem Bandvorrat verbundene Anfangsabschnitt des Bandes 2 entgegen der Vorschubrichtung zurückgezogen werden und die Schlaufe um das Packgut gespannt werden. Nach dem Spannen drückt die zweite Klemmplatte 6 den Anfangsabschnitt des Bandes gegen die Widerlagerplatte. Zuvor ist der Endanschlag 9 zwischen Band 2 und der Widerlagerplatte 7 entfernt worden. Nun trennt eine Schneide 10 nahe der ersten Klemmplatte den Anfangsabschnitt des Bandes 2 von dem Bandvorrat. Die Schwingplatte 5 drückt den Anfangsabschnitt gegen den Endabschnitt des Bandes 2, welcher sich gegen die Widerlagerplatte 7 abstützt. Die Schwingplatte 5 wird durch einen Schwingantrieb (nicht dargestellt) in Schwingbewegungen versetzt, wodurch eine Reibungswärme zwischen Anfangsabschnitt und Endabschnitt des Bandes erzeugt wird, welche zu einem Aufschmelzen der Bandabschnitte und zu einem Verschweißen führt.

Die auf diese Weise hergestellte Schweißstelle 11 ist in Fig. 3 zu erkennen.

Wie in Fig. 2 erkennbar ist, befindet sich der Endanschlag 9 in Vorschubrichtung nahe hinter der Schwingplatte 5. Da das freie Ende 8 des Bandes 2 mit großer Geschwindigkeit gegen den Endanschlag 9 schlägt, besteht die Gefahr, daß es bis in den Bereich der Schwingplatte 5 zurückprallt. Hierdurch wird die Länge der Schweißstelle 11 reduziert und ihre maximale Festigkeit abgesenkt.

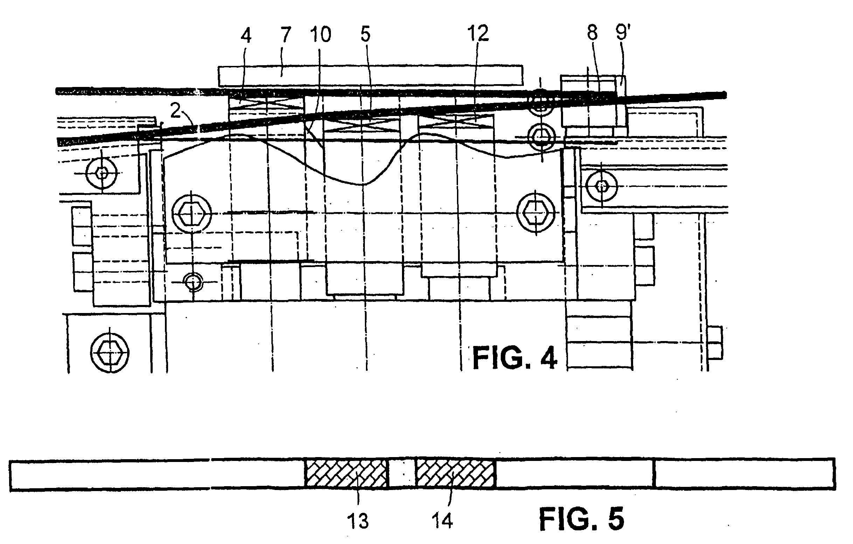

Eine erfindungsgemäße Vorrichtung zur Erzeugung einer Verschweißung mit höherer Sicherheit ist in Fig. 4 dargestellt. Die erste Änderung besteht darin, daß der Endanschlag 9' für das freie Bandende 8 in Vorschubrichtung jenseits der Widerlagerplatte 7 angeordnet ist. Ferner wurde die zweite Klemmplatte durch eine Klemm-/Schwingplatte 12 ersetzt, welche ebenso wie die mittlere Schwingplatte 5 mit einem Schwingantrieb gekoppelt ist. Der verlagerte Endanschlag 9' weist einen großen Abstand (bis zu 40 mm) von dem Ende der Klemm-/Schwingplatte 12 auf. Der Bewegungsablauf beim Einschießen und Verschweißen des Bande entspricht dem Bewegungsablauf der Vorrichtung aus Fig. 2. Das von dem Bandvorrat abgezogene Band 2 wird hinter der ersten Klemmplatte 4 und vor der Schwingplatte 5 und der Klemm-/Schwingplatte 12 hindurchgeführt, um in einer Bandführungsvorrichtung in Form einer Schlaufe um das Packgut geführt zu werden. Am Ende der Bewegungsbahn läuft das freie Bandende 8 vor der ersten Klemmplatte 4 sowie zwischen dem mit dem Bandvorrat verbundenen Bandabschnitt und der Widerlagerplatte 7 an der Schwingplatte 5 und der Klemm-/Schwingplatte 12 vorbei. Die erste Klemmplatte 4 wird beim Anschlagen des Bandendes gegen den Endanschlag 9 senkrecht zur Bandebene gegen die Widerlagerplatte 7 bewegt. Dabei wird das freie Bandende eingeklemmt.

Anschließend wird das Band zurückgezogen und gespannt. Danach klemmt die Klemm-/Schwingplatte 12 sowohl den Anfangsabschnitt als auch den Endabschnitt des Bandes 2 ein, und das Band wird durch die Schneide 10 nahe der ersten Klemmplatte 4 vom Bandvorrat abgetrennt. Die Schwingplatte 5 wird ebenfalls nach oben bewegt, so daß sie sowohl den Anfangsabschnitt als auch den Endabschnitt des Bandes zusammen und gegen die Widerlagerplatte 7 drückt.

Sowohl die Schwingplatte 5 als auch die Klemm-/Schwenkplatte 12 werden mittels des gleichen (nicht dargestellten) Schwingantriebs in Schwingbewegung versetzt. Durch die hieraus entstehende Reibwärme werden die beiden in Fig. 5 dargestellten Schweißstellen 13, 14 erzeugt. Jede einzelne dieser Schweißstellen 13,14 hat in etwa eine Festigkeit, die der Festigkeit der Schweißstelle 11 aus Fig. 3 entspricht, die gemäß dem Stand der Technik erzeugt wurde. Da Zugkräfte von den beiden Bandenden in die jeweils angrenzende Schweißstelle eingeleitet werden, teilen sich bei der Verschweißung gemäß Fig. 5 die Zugkräfte gleichmäßig auf die beiden Schweißstellen 13 und 14 auf. Die Belastung der einzelnen Schweißstellen wird damit reduziert und die Sicherheit des Bandes gegen Zerstörung der Schweißstelle erhöht. Ferner ist - falls doch eine der beiden Schweißstellen fehlerhaft ist oder zerstört wird - zur Sicherheit der Verbindung immer eine voll funktionsfähige zweite Schweißstelle vorhanden.

### Bezugszeichenliste:

- 1: Packgut
- 2: Band
- 3: Schweißeinrichtung
- 4: erste Klemmplatte
- 5: Schwingplatte
- 6: zweite Klemmplatte
- 7: Widerlagerplatte
- 8: freies Bandende
- 9,9': Endanschlag
- 10: Schneide
- 11: Schweißstelle
- 12: Klemm-/Schwingplatte
- 13: Schweißstelle
- 14: Schweißstelle
- 15: Umlenkrolle

## Patentansprüche

1. Verfahren zum Reibschweißen zweier sich überlappender Abschnitte eines thermoplastischen Bandes (2), bei dem zunächst das Band (2) zur Bildung einer Schlaufe um ein Packgut (1) geführt, gespannt und mittels mindestens einer das Band (2) gegen eine Widerlagerplatte (7) drückenden Klemmplatte (4) festgelegt wird und anschließend mittels einer durch einen Schwingantrieb angetriebenen Schwingplatte (5) die überlappenden Abschnitte gegeneinander und gegen eine Widerlagerplatte (7) gedrückt und miteinander verschweißt werden, wobei mindestens zwei in Längsrichtung des Bandes (2) hintereinander liegende Schweißstellen (13,14) erzeugt werden und zu deren Erzeugung zwei im Abstand zueinander angeordnete Schwingplatten (5,12) gegen das Band (2) gedrückt werden,
**dadurch gekennzeichnet, daß**
a) das freie Ende des Bandes (2) vor Bildung der Schlaufe nacheinander in Vorschubrichtung an einer ersten Schwingplatte (5) und einer kombinierten Klemm-/Schwingplatte (12) vorbei zu einer Bandführungsvorrichtung transportiert wird,
b) das freie Ende des Bandes (2) nach Bildung der Schlaufe nacheinander in Vorschubrichtung an einer ersten Klemmplatte (4) sowie an der genannten ersten Schwingplatte (5) und der genannten kombinierten Klemm-/Schwingplatte (12), welche beide durch den mit dem Bandvorrat verbundenen Anfangsabschnitt des die Schlaufe bildenden Bandes (2) abgedeckt sind, vorbei gegen einen Endanschlag (9') transportiert wird,
c) der freie Endabschnitt des die Schlaufe bildenden Bandes (2) vor dem Spannen des Bandes (2) mittels der genannten ersten Klemmplatte (4) gegen die Widerlagerplatte (7) gedrückt und hierdurch festgelegt wird,
d) der Anfangsabschnitt des die Schlaufe bildenden Bandes (2) nach dem Spannen gemeinsam mit dem freien Endabschnitt mittels der kombinierten Klemm-/Schwingplatte (12) gegen eine Widerlagerplatte (7) gedrückt und nahe der ersten Klemmplatte (4) abgeschnitten wird,
e) die erste Schwingplatte (5) zwischen der ersten Klemmplatte (4) und der kombinierten Klemm-/Schwingplatte (12) gegen die beiden an der Widerlagerplatte (7) anliegenden Bandabschnitte drückt und
f) sowohl die Klemm-/Schwingplatte (12) als auch die erste Schwingplatte (5) zur Erzeugung je einer der zwei Schweißstellen (13,14) durch einen Schwingantrieb in Schwingbewegungen versetzt werden.

2. Verfahren nach Anspruch 1, **dadurch gekennzeichnet, daß** sowohl die Klemm-/Schwingplatte (12) als auch die Schwingplatte (5) durch den gleichen Schwingantrieb angetrieben werden.

3. Verfahren nach einem der vorangehenden Ansprüche, **dadurch gekennzeichnet, daß** die Schwingplatten (5,12) durch den Schwingantrieb in Querrichtung des Bandes (2) in Schwingungen versetzt werden.

4. Vorrichtung zum Reibschweißen zweier sich überlappender Abschnitte eines thermoplastischen Bandes (2), mit
a) einer ersten Klemmplatte (4), die mit einem Klemmantrieb gekoppelt ist, der diese Klemmplatte (4) gegen einen an einer Widerlagerplatte (7) anliegenden Endabschnitt des um ein Packgut herum gegen einen Endanschlag (9') geführten Bandes (2) drückt,
b) einem Spannantrieb zum Spannen der durch das Band (2) gebildeten Schlaufe,
c) einer zweite Klemmplatte (12), die mit einem Klemmantrieb gekoppelt ist, der diese zweite Klemmplatte (12) nach dem Spannen gegen den durch die Widerlagerplatte (7) abgestützten Anfangsabschnitt der Bandschlaufe drückt,
d) mindestens einer zwischen diesen Klemmplatten (5,12) angeordneten Schwingplatte (5),
**dadurch gekennzeichnet, daß** der Endanschlag (9') hinter der zweiten Klemmplatte (12) liegt, so daß diese sowohl den Anfangsabschnitt als auch den Endabschnitt der Bandschlaufe gegen die Widerlagerplatte (7) drückt, und daß die zweite Klemmplatte zur Bildung der kombinierten Klemm/Schwingplatte (12) zur Erzeugung einer zweiten Schweißstelle mit einem Schwingantrieb gekoppelt ist.

5. Vorrichtung nach Anspruch 4, **dadurch gekennzeichnet, daß** der Abstand zwischen der ersten Schwingplatte (5) und der zweiten Schwingplatte (12) mindestens 5 mm, vorzugsweise etwa 10 mm beträgt.

6. Vorrichtung nach einem der Ansprüche 4 und 5, **dadurch gekennzeichnet, daß** beide Schwingplatten (5,12) mit dem gleichen Schwingantrieb gekoppelt sind.

7. Vorrichtung nach einem der Ansprüche 4 bis 6, **dadurch gekennzeichnet, daß** der Schwingantrieb die Schwingplatten (5,12) in Querrichtung des Bandes (2) bewegt.

8. Vorrichtung nach der vorangehenden Ansprüche 4 bis 7, **dadurch gekennzeichnet, daß** alle Klemm- und Schwingplatten (4,5,12) sich gegen die gleiche Widerlagerplatte (7) abstützen.

9. Vorrichtung nach Anspruch 8, **dadurch gekennzeichnet, daß** die dem Band (2) zugewandte Oberfläche der Widerlagerplatte (7) strukturiert und mit spitzen Zähnen versehen ist.

10. Vorrichtung nach einem der Ansprüche 4 bis 9, **dadurch gekennzeichnet, daß** die dem Band (2) zugewandten Oberflächen der Klemmplatten (4) und/oder Schwingplatten (5,12) strukturiert und mit spitzen Zähnen versehen sind.

## Claims

1. A method of friction welding two overlapping sections of a thermoplastic strip (2) where first the strip (2) is passed around a package (1) to form a loop, then tightened and secured by at least one clamping plate (4) that presses the strip (2) against an abutment plate (7), and then the overlapping sections are pressed together and against an abutment plate (7) by a vibrating plate (5) driven by a vibrating drive and are thus welded, wherein at least two welds (13, 14) are produced one behind the other in the longitudinal direction of the strip (2) and two vibrating plates (5, 12) arranged with a distance between them are pressed against the strip (2) to produce these two welds (13, 14),
**characterized in that**
a) before forming the loop, the free end of the strip (2) is conveyed to a strip guidance device, passing in succession in the direction of feed a first vibrating plate (5) and a combined clamping and vibrating plate (12),
b) after forming the loop, the free end of the strip (2) is conveyed toward an end stop (9'), passing in succession in the direction of feed a first clamping plate (4) as well as said first vibrating plate (5) and said combined clamping and vibrating plate (12), both of which are covered by the initial section of the strip (2) forming the loop and being connected to the strip supply,
c) before tightening the strip (2), the free end section of the strip (2) forming the loop is pressed against the abutment plate (7) by said first clamping plate (4) and thus secured,
d) after tightening, the initial section of the strip (2) forming the loop is pressed together with the free end section against an abutment plate (7) by the combined clamping and vibrating plate (12) and is cut off near the first clamping plate (4),
e) the first vibrating plate (5) between the first clamping plate (4) and the combined clamping and vibrating plate (12) presses against the two strip sections resting on the abutment plate (7), and
f) vibration is induced in both the clamping and vibrating plate (12) and the first vibrating plate (5) by a vibrating drive to produce each of the two welds (13, 14).

2. The method according to Claim 1, **characterized in that** both the clamping and vibrating plate (12) and the vibrating plate (5) are driven by the same vibrating drive.

3. The method according to one of the preceding Claims, **characterized in that** vibration is induced in the vibrating plates (5, 12) by the vibrating drive in the transverse direction of the strip (2).

4. A device for friction welding of two overlapping sections of a thermoplastic strip (2) comprising
a) a first clamping plate (4) which is connected to a clamping drive, pressing this clamping plate (4) against an end section of the strip (2) which rests on an abutment plate (7) and is wrapped around the package and guided up to an end stop (9'),
b) a tension drive for tightening the loop formed by the strip (2),
c) a second clamping plate (12) which is connected to a clamping drive which presses this second clamping plate (12) against the initial section of the strip loop which is supported by the abutment plate (7) after tightening,
d) at least one vibrating plate (5) arranged between these clamping plates (5, 12),
**characterized in that** the end stop (9') is located downstream from the second clamping plate (12), so that the second clamping plate presses both the initial and end sections of the strip loop against the abutment plate (7) and **in that** the second clamping plate is connected to a vibrating drive to form the combined clamping and vibrating plate (12) for producing a second weld.

5. The device according to Claim 4, **characterized in that** the distance between the first vibrating plate (5) and the second vibrating plate (12) is at least 5 mm, preferably about 10 mm.

6. A device according to one of Claims 4 and 5, **characterized in that** both vibrating plates (5, 12) are connected to the same vibrating drive.

7. A device according to one of Claims 4 through 6, **characterized in that** the vibrating drive moves the vibrating plates (5, 12) in the transverse direction of the strip (2).

8. A device according to the preceding Claims 4 through 7, **characterized in that** all clamping and vibrating plates (4, 5, 12) are supported against the same abutment plate (7).

9. A device according to Claim 8, **characterized in that** the surface of the abutment plate (7) facing the strip (2) is structured and provided with pointed teeth.

10. A device according to one of Claims 4 through 9, **characterized in that** the surfaces of the clamping plates (4) and/or vibrating plates (5, 12) facing the strip (2) are structured and provided with pointed teeth.

## Revendications

1. Procédé dé soudage par friction de deux portions d'une bande thermoplastique (2) qui se chevauchent, dans lequel la bande (2) est dans un premier temps guidée pour former une boucle autour d'un paquet (1), tendue et immobilisée au moyen d'au moins une plaque de serrage (4) plaquant la bande (2) contre une plaque de contre-appui (7), puis les portions se chevauchant sont pressées l'une contre l'autre et contre une plaque de contre-appui (7) au moyen d'une plaque vibrante (5) entraînée par un dispositif d'entraînement en vibration et sont soudées l'une à l'autre, au moins deux points de soudure (13, 14) étant produits l'un derrière l'autre dans la direction longitudinale de la bande (2) et deux plaques vibrantes (5, 12) agencées à distance l'une de l'autre étant pressées contre la bande (2) pour produire lesdits points de soudage,
**caractérisé en ce que**
a) avant formation de la boucle, l'extrémité libre de la bande (2) est amenée successivement, dans la direction d'avancement, devant une première plaque vibrante (5) et une plaque vibrante de serrage (12) jusqu'à un dispositif de guidage de bande,
b) après formation de la boucle, l'extrémité libre de la bande (2) est amenée successivement, dans le sens d'avancement, devant une première plaque de serrage (4) et devant ladite première plaque vibrante (5) et ladite plaque vibrante de serrage (12), qui sont toutes deux recouvertes par la portion de départ de la bande (2) formant la boucle, qui est reliée à la réserve de bande, jusqu'à une butée de fin de course (9'),
c) avant tension de la bande (2), la portion terminale libre de la bande (2) formant la boucle est pressée contre la plaque de contre-appui (7) au moyen de ladite première plaque de serrage (4) et est ainsi immobilisée,
d) après la tension, la portion de départ de la bande (2) formant la boucle est pressée avec la portion terminale libre au moyen de la plaque vibrante de serrage (12) contre une plaque de contre-appui (7) et est coupée près de la première plaque de serrage (4),
e) la première plaque vibrante (5) entre la première plaque de serrage (4) et la plaque vibrante de serrage (12) appuie contre les deux portions de bande en contact avec la plaque de contre-appui (7) et
f) la plaque vibrante de serrage (12) et la première plaque vibrante (5) sont entraînées en vibration par un dispositif d'entraînement en vibration pour produire chacune un des deux points de soudure (13, 14).

2. Procédé selon la revendication 1, **caractérisé en ce que** la plaque vibrante de serrage (12) et la plaque vibrante (5) sont entraînées par le même dispositif d'entraînement en vibration.

3. Procédé selon l'une quelconque des revendications précédentes, **caractérisé en ce que** les plaques vibrantes (5, 12) sont entraînées en vibration par le dispositif d'entraînement en vibration transversalement à la bande (2).

4. Dispositif de soudage par friction de deux portions d'une bande thermoplastique (2) qui se chevauchent avec
a) une première plaque de serrage (4) couplée à un dispositif d'entraînement de serrage qui presse ladite plaque de serrage (4) contre une portion terminale, en contact avec une plaque de contre-appui (7) , de la bande (2) guidée autour d'un paquet jusqu'à une butée de fin de course (9'),
b) un dispositif d'entraînement de tension pour tendre la boucle formée par la bande (2),
c) une deuxième plaque de serrage (12) couplée à un dispositif d'entraînement de serrage qui, après tension, presse ladite deuxième plaque de serrage (12) contre la portion de départ de la boucle de bande en appui contre la plaque de contre-appui (7),
d) au moins une plaque vibrante (5) agencée entre ces plaques de serrage (4, 12),
**caractérisé en ce que** la butée (9') est située derrière la deuxième plaque de serrage (12) de sorte que cette dernière presse à la fois la portion de départ et la portion terminale de la boucle de bande contre la plaque de contre-appui (7) et **en ce que** la deuxième plaque de serrage est couplée à un dispositif d'entraînement en vibration pour former la plaque vibrante de serrage (12) destinée à produire un deuxième point de soudure.

5. Dispositif selon la revendication 4, **caractérisé en ce que** la distance entre la première plaque vibrante (5) et la deuxième plaque vibrante (12) est supérieure ou égale à 5 mm et de préférence égale à 10 mm environ.

6. Dispositif selon l'une quelconque des revendications 4 et 5, **caractérisé en ce que** les deux plaques vibrantes (5, 12) sont couplées au même dispositif d'entraînement en vibration.

7. Dispositif selon l'une quelconque des revendications 4 à 6, **caractérisé en ce que** le dispositif d'entraînement en vibration déplace les plaques vibrantes (5, 12) transversalement à la bande (2).

8. Dispositif selon l'une quelconque des revendications 4 à 7, **caractérisé en ce que** toutes les plaques vibrantes et/ou de serrage (4, 5, 12) prennent appui contre la même plaque de contre-appui (7).

9. Dispositif selon la revendication 8, **caractérisé en ce que** la surface de la plaque de contre-appui (7) en regard de la bande (2) est structurée et pourvue de dents pointues.

10. Dispositif selon l'une quelconque des revendications 4 à 9, **caractérisé en ce que** la surface des plaques de serrage (4) et/ou des plaques vibrantes (5, 12) qui est en regard de la bande (2) est structurée et pourvue de dents pointues.
